**Europäisches Patentamt**

**European Patent Office**

**Office européen des brevets**

(11) Veröffentlichungsnummer: **0 029 607**
**B1**

# EUROPÄISCHE PATENTSCHRIFT

(45) Veröffentlichungstag der Patentschrift:
04.01.84

(51) Int. Cl.³: **H 04 J 3/06, H 04 B 12/00**

(21) Anmeldenummer: **80107322.2**

(22) Anmeldetag: **24.11.80**

(54) **Zeitmultiplexsystem.**

(30) Priorität: **27.11.79 DE 2947770**

(43) Veröffentlichungstag der Anmeldung:
**03.06.81 Patentblatt 81/22**

(45) Bekanntmachung des Hinweises auf die Patenterteilung:
**04.01.84 Patentblatt 84/1**

(84) Benannte Vertragsstaaten:
**AT BE CH DE FR GB IT LI NL SE**

(56) Entgegenhaltungen:
**FR - A - 1 051 760**
**US - A - 3 766 315**

**TELECOMMUNICATIONS AND RADIO ENGINEERING,
Band 27/28, Nr. 10, Oktober 1974, Washington, US, V.B.
BRAUDE: "Some methods of obtaining a
synchronization signal in optical pulse code
mudulation-time division communications channels",
Seiten 64-68**

(73) Patentinhaber: **SIEMENS AKTIENGESELLSCHAFT,
Berlin und München Wittelsbacherplatz 2,
D-8000 München 2 (DE)**

(72) Erfinder: **Panzer, Klaus, Dr. Ing., Strassbergerstrasse 47,
D-8000 München 40 (DE)**

Zeitmultiplexsystem

Die Erfindung bezieht sich auf ein Zeitmultiplexsystem mit zeitlicher Bündelung von pulsmodulierten Signalen aus Pulsen gleicher Form und Breite, insbesondere von optisch übertragbaren PPM-Signalen.

In solchen Zeitmultiplexsystemen werden die einzelnen pulsmodulierten Signale in jeweils einem Zeitkanal zugeordneten Zeitabschnitten (Zeitfächer) mit in ständig aufeinanderfolgenden sog. Pulsrahmen (Multiplexrahmen) jeweils gleicher zeitlicher Lage übertragen. Um dabei einen Gleichlauf zwischen sendeseitigen und empfangsseitigen Einrichtungen des Zeitmultiplexsystems zu gewährleisten, muss die zeitliche Lage jedes Pulsrahmens (Multiplexrahmens) und der einzelnen Zeitfächer darin eindeutig definiert sein.

Hierzu kann man den Anfang jedes Pulsrahmens oder zumindest jedes beispielsweise zweiten Pulsrahmens durch die Übertragung eines Rahmenkennungssignals definieren und davon ausgehend dann die zeitliche Lage der nachfolgenden Zeitfächer ableiten. Ein solches Rahmenkennungssignal kann z.B. durch einen am Rahmenanfang vorgesehenen Rahmenkennungsimpuls gegeben sein, der breiter als die übrigen Impulse eines Pulsrahmens und damit von diesen unterscheidbar ist. Eine solche Rahmenkennung verbraucht allerdings einen entsprechenden Zeitabschnitt des Pulsrahmens und erfordert ausserdem einen entsprechenden Aufwand bei der Auswertung; noch grösser ist der Aufwand, wenn am Rahmenanfang ein besonderer Pilotton oder ein sog. Rahmenkennungswort übertragen wird, der (das) dann empfangsseitig durch eine entsprechende Suchschaltung ermittelt wird.

So ist es beispielsweise (aus „Telecommunications and Radio Engineering" Bde." 27/28, Okt. 1974 Nr. 10, S. 64 bis 68) bekannt, in einem optischen PCM-Übertragungssystem zur Sicherung des Gleichlaufs von Sender und Empfänger sendeseitig in das PCM-Signal eine Synchronisationsinformation einzufügen (und diese empfangsseitig wieder herauszuziehen), indem am Rahmenanfang ein zusätzlicher Rahmenerkennungsimpuls grösserer Amplitude oder eine zusätzliche Impulspause eingefügt wird.

Es ist auch möglich, eine Information über die zeitliche Lage der Pulsrahmen implizit, ohne dass ein eigenes Synchronisierungszeitfach vorgesehen werden müsste, im übertragenen Signalgemisch vorzusehen.

So ist es z.B. (ebenfalls aus „Telecommunications and Radio Engineering" Bde. 27/28 Okt. 1974, Nr. 10, S. 64 bis 68) bekannt, in einem optischen PCM-Übertragungssystem zur Sicherung des Gleichlaufs von Sender und Empfänger sendeseitig in das PCM-Signal eine Synchronisierungsinformation in der Weise einzufügen, dass eine Gruppe von k Impulsen eines m Impulse umfassenden Pulsrahmens in ihrer Amplitude angehoben wird oder dass die Amplituden aller m Impulse eines Pulsrahmens nach einer Sinusfunktion abgestuft werden. Des weiteren ist (aus US-A Nr. 3766315) eine synchronisationskanallose Synchronisation eines PCM-Empfängers durch die digitale Korrelation des Empfangssignals mit einem im Empfangssignal als Prefix enthaltenen Bezugssignal bekannt, das aus einem unmodulierten Subträger, gefolgt von einem mit einem „bit-sync"-Code modulierten Subträger, besteht, wobei das Subträgersignal mit einem Pseudo-Noise-Codemodulationssignal und einem Datensignal EX-OR-verknüpft wird.

Ferner ist es (aus FR-A Nr. 1051760) bekannt, zur ebenfalls synchronisationskanallosen Synchronisation der Empfangseinrichtung eines PAM-Multiplexsystems mit n Kanälen bei an sich monopolarer Modulation eine Polaritätsumkehr in n-ten (oder O-ten) Kanal vorzusehen.

Der Erfindung liegt demgegenüber die Aufgabe zugrunde, unter Vermeidung besonderer Rahmenkennungssignale auch in einem Zeitmultiplexsystem mit zeitlicher Bündelung von pulsmodulierten Signalen aus Pulsen gleicher Form und Breite eine Information über die zeitliche Lage der Pulsrahmen und, davon ableitbar, der einzelnen Zeitfächer zur Verfügung stellen zu können.

Ausgehend von einem Zeitmultiplexsystem mit zeitlicher Bündelung von pulsmodulierten Signalen, in dem eine Information über die zeitliche Lage der Pulsrahmen aus den pulsmodulierten Signalen der Pulsrahmen gewonnen wird, wird dies erfindungsgemäss dadurch erreicht, dass bei zeitlicher Bündelung von pulsmodulierten Signalen aus Pulsen gleicher Form und Breite, insbesondere vonoptisch übertragbaren PPM-Signalen, jeweils in dem einen Teil jedes Pulsrahmens die Signale des betreffenden eines Teiles der Zeitkanäle als Impulse übertragen werden und in dem anderen Teil jedes Pulsrahmens die Signale des anderen Teiles der Zeitkanäle als Impulspausen übertragen werden.

Die Erfindung, die vorzugsweise bei der gebündelten Übertragung mehrerer Videosignale zu einem Teilnehmer eines Breitbandkommunikationsnetzes mit durch Lichtwellenleiter gebildeten Teilnehmerleitungen Anwendung finden kann, bringt den Vorteil einer implizit, ohne dass ein eigenes Synchrozeitfach vorgesehen werden müsste, im übertragenen Signalgemisch enthaltenen, relativ starken und damit empfangsseitig relativ leicht zur Definition der zeitlichen Lage des Pulsrahmens und, davon ableitbar, der einzelnen Zeitfächer auswertbaren Rahmentaktfrequenzkomponente mit sich. Des weiteren bringt die Erfindung den Vorteil mit sich, dass bei Gleichheit der Anzahl von Impulsen und Impulspausen im Pulsrahmen der Gleichstrommittelwert des übertragenen Signalgemischs praktisch gleich der halben Impulsamplitude ist, was eine entsprechend einfache Realisierung einer empfangsseitig vorzusehenen Amplitudenentscheidungsschwelle ermöglicht; es genügt hier ggf. eine einfache kapazitive Anschaltung eines Amplitudenentscheiders. Zweckmässig ist es, dass in weiterer Ausgestaltung der Erfindung sendeseitig lediglich in der einen Hälfte der Zeitkanäle pulsphasenmodulierte Impulse gebildet und übertragen werden, während in der anderen Hälfte jedes Pulsrahmens in der anderen Hälfte der Zeitkanäle gebildete pulsphasenmodulierte Impulse von einem in seiner Amplitude der Impulsamplitude entsprechenden Dauersignal subtrahiert werden und die Signaldifferenz übertragen wird; dies ermöglicht eine entsprechend einfache Erzeugung und Zusammenführung von Impulsen und Impulspausen zu dem zu übertragenden Signalgemisch.

Zur Wiedergewinnung der ursprünglichen Signale aus diesem Signalgemisch ist es zweckmässig, dass in weiterer Ausgestaltung der Erfindung empfangsseitig Impulse und Impulspausen zur Demodulation zu kanalindividuellen Tiefpassfiltern über Demultiplexer-Pulswandler-Schaltungen gelangen, die durch einen mit der im übertragenen Signalgemisch enthaltenen Rahmentaktkomponente geregelten Taktgenerator gesteuert werden.

Es sei an dieser Stelle bemerkt, dass eine zeitliche Bündelung von optisch übertragbaren PPM-Signalen z.B. aus IEEE Journal of Quantum Electronics, QE-14 (1978) 5, 343...346 grundsätzlich bekannt ist; Probleme einer Rahmensynchronisation werden dort jedoch nicht berührt.

Anhand der Zeichnungen sei die Erfindung noch näher erläutert. Dabei verdeutlicht Fig. 1 die Lage von phasenmodulierten Impulsen und Impulspausen in einem Zeitmultiplexrahmen eines Zeitmultiplexsystems gemäss der Erfindung; Fig. 2 lässt in einem solchen Zeitmultiplexsystem auftretende Betriebszustände bzw. Signalverläufe erkennen, und zwar unter Bezugnahme auf ein in Fig. 3 dargestelltes Ausführungsbeispiel einer sendeseitigen Modulator- und Multiplixer-Schaltung und auf ein in Fig. 4 dargestelltes Ausführungsbeispiel einer empfangseitigen Demultiplexer- und Demodulator-Schaltung.

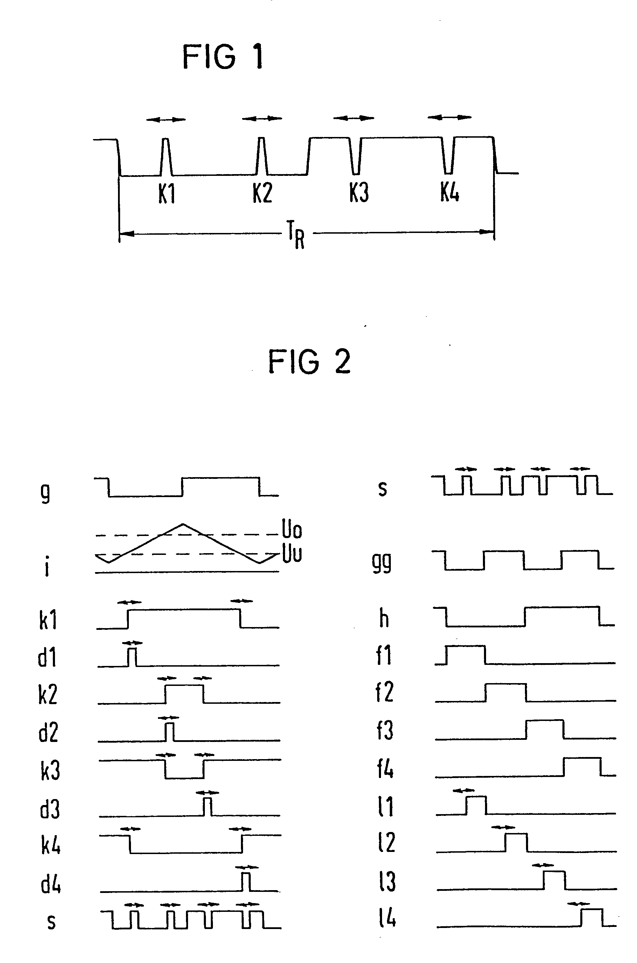

Die Zeichnung (Fig. 1) zeigt schematisch ein Ausführungsbeispiel eines Pulsrahmens $T_R$ eines Zeitmultiplexsystems gemäss der Erfindung. Dieser Pulsrahmen $T_R$ umfasst im Beispiel vier jeweils zusammen mit den entsprechenden Zeitfächern vorangehender und nachfolgender Pulsrahmen einen Zeitkanal K1, K2, K3, K4 bildende Zeitfächer, in denen jeweils ein phasenmoduliertes impulsförmiges Signal übertragbar sein möge. Dabei werden jeweils in der einen Hälfte K1, K2 der Zeitkanäle K1,..., K4 als Impulse übertragen, und in der anderen Hälfte jedes Pulsrahmens $T_R$ werden die Signale der anderen Hälfte K3, K4 der Zeitkanäle K1,...,K4 als Impulspausen übertragen. Die Impulspausen bilden dabei gewissermassen die Differenz zwischen einem in der zweiten Hälfte jedes Pulsrahmens $T_R$ vorhandenen, in seiner Amplitude der Impulsamplitude entsprechenden Dauersignal, wie es in Fig. 2 in Zeile g angedeutet ist, und davon subtrahierten und damit den Impulspausen zugrunde liegenden Impulsen, wie dies unten noch näher erläutert werden wird.

Wie aus Fig. 1 ersichtlich ist, ist in dem in dieser Weise übertragenen Signalgemisch die Rahmentaktfrequenzkomponente, wie sie auch aus Fig. 2g zu ersehen ist, sehr deutlich enthalten, so dass eine Wiedergewinnung des Rahmentakts entsprechend erleichtert ist, ohne dass etwa in einem eigenen Zeitkanal ein besonderes Rahmenkennungssignal übertragen werden müsste.

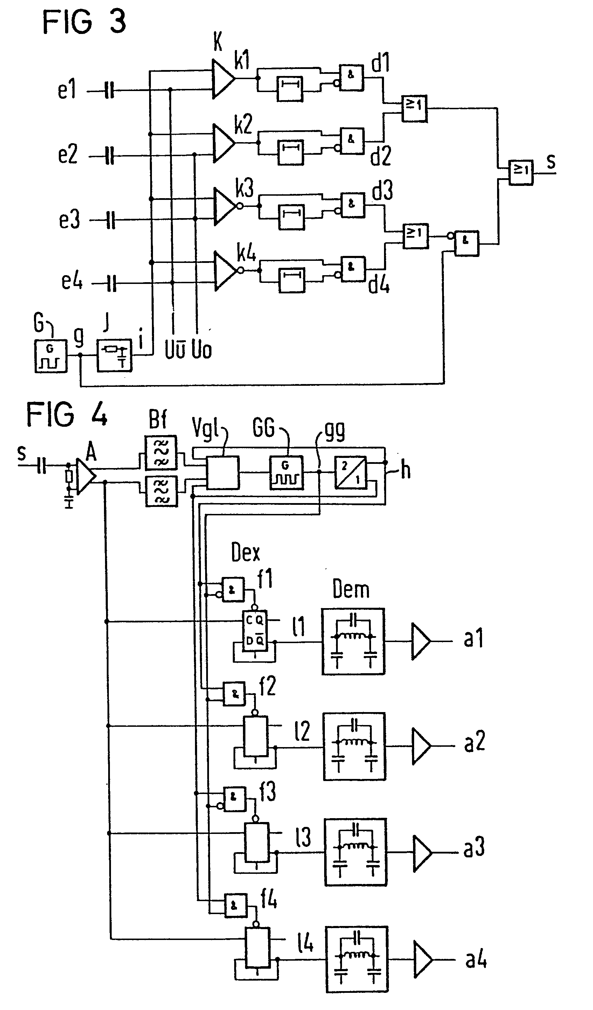

Die Bildung von in der einen Pulsrahmenhälfte zu übertragenden pulsphasenmodulierten Impulsen und von weiteren derartigen Impulsen entsprechenden, in der anderen Pulsrahmenhälfte zu übertragenden pulsphasenmodulierten Impulspausen kann mit einer Schaltungsanordnung geschehen, wie sie in Fig. 3 dargestellt ist. In der Pulsphasenmodulator- und Multiplexer-Schaltung nach Fig. 3 wird ein aus dem von einem Taktgenerator G an seinem Ausgang g erzeugten Pulsrahmentakt, wie er in Fig. 2g dargestellt ist, über eine Integratorschaltung J ein Sägezahnsignal abgeleitet, wie es in Fig. 2i angedeutet ist; dieses Sägezahnsignal gelangt über die Integratorausgangsleitung i zu den einen Eingängen von kanalindividuellen, beispielsweise durch AMD *voltage comparators* Am 685 realisierbaren Komparatoren K, die mit ihrem jeweils anderen Eingang an einer Offset-Spannung Uu bzw. Uo liegen, wie sie ebenfalls in Fig. 2i angedeutet ist.

Von kanalindividuellen Eingängen e1, e2, e3, e4 her werden die Komparatoren K von den jeweiligen modulierenden Signalen beaufschlagt. Jeweils so lange, wie die Summe von modulierendem Signal und Offset-Spannung den Momentanwert des Sägezahnsignals überschreitet, ist der betreffende Komparator dann aktiviert; die sich daraus ergebenden, pulslängenmodulierten Signale auf den Komparatorausgangsleitungen k1, k2, k3, k4 sind (beispielsweise für den Momentanwert Null des jeweiligen modulierenden Signals) in Fig. 2 in den Zeilen k1, k2, k3, k4 dargestellt. Aus diesen Signalen gewinnt man mit Hilfe von gemäss Fig. 3 beispielsweise durch ein Verzögerungsglied und ein Sperrglied gebildeten Differenzierschaltungen auf deren Augangsleitungen d1, d2, d3, d4 auftretende pulsphasenmodulierte Impulse, wie sie in Fig. 2 in den Zeilen d1, d2, d3, d4 dargestellt sind.

Die in der ersten Hälfte eines Pulsrahmens zu übertragenden Impulse (vgl. Fig. 2 d1 und d2) und die in der zweiten Hälfte des Pulsrahmens zum Tragen kommenden Impulse (vgl. Fig. 2 d3 und d4) werden jeweils für sich z.B. über ein ODER-Glied zusammengefasst, wonach die ersteren, in der ersten Hälfte des Pulsrahmens zu übertragenden Impulse z.B. über ein weiteres ODER-Glied auf die das zu übertragende Signalgemisch, wie es in Fig. 2 in Zeile s angedeutet ist, führende Signalleitung s gelangen. Die übrigen, in der zweiten Hälfte des Pulsrahmens zum Tragen kommenden Impulse werden z.B. mittels eines Sperrgliedes von dem vom Taktgenerator G erzeugten Rahmentaktsignal (Fig. 2g) subtrahiert, wonach das verbleibende Differenzsignal ebenfalls auf die das zu übertragende Signalgemisch, wie es in Fig. 2s angedeutet ist, führende Signalleitung s gelangt. Die Signalleitung s kann dabei, ohne dass dies in Fig. 3 noch dargestellt ist, zu einer elektro-optischen Sendestufe mit einer Laserdiode führen, von der aus das Signalgemisch von pulsphasenmodulierten Impulsen und Impulspausen beispielsweise über einen in einem Breitbandkommunikationsnetz eine Breitband-Vermittlungsstelle mit einem Teilnehmeranschluss verbindenden Lichtwellenleiter optisch weiterübertragen wird.

Zur empfangsseitigen Wiedergewinnung des Rahmentaktes aus dem übertragenen Signalgemisch kann letzteres, wie dies aus Fig. 4 ersichtlich wird, von einer in Fig. 4 nicht mehr dargestellten optoelektrischen Empfangsstufe über eine dann das Signalgemisch gemäss Fig. 2s führende Leitung s zu einem kapazitiv angekoppelten Amplitudenentscheider A gelangen, der ebenfalls durch einen AMD *voltage comparator* Am 685 gegeben sein kann. Dieser Amplitudenentscheider regeneriert die empfangenen Impulse und Impulspausen, und zwar ohne eine besondere Messung der Impulsamplituden und eine entsprechende Nachführung der Entscheidungsschwelle. Aus dem regenerierten Signalgemisch sowie dem dazu komplementären Signal wird mittels je eines Bandfilters BF die Rahmentaktkomponente ausgefiltert, und beide Signale werden einem z.B. mit Hilfe eines Siemens-Mischers S 042 realisierten Phasengleicher Vgl zugeführt, der ausserdem mit einem von einer ihrerseits vom Phasenvergleicher gesteuerten Taktgeneratorschaltung GG, 2/1 erzeugten Rahmentakt beaufschlagt wird, so dass dieser mit dem im übertragenen Signalgemisch enthaltenen Rahmentakt synchronisiert wird. Die Taktgeneratorschaltung umfasst dabei einen Taktgenerator GG, der auf seiner Ausgangsleitung gg einen Takt mit einer Taktfrequenz gleich dem Doppelten der Rahmentaktfrequenz erzeugt, wie er in Fig. 2 in Zeile gg dargestellt ist; diesem Taktgenerator GG ist ein auf seiner Ausgangsleitung h den Rahmentakt, wie er in Fig. 2h dargestellt ist, führender Binärteiler 2/1 nachgeschaltet, der ausgangsseitig — ggf. über eine in Fig. 4 nicht näher dargestellte Tiefpassschaltung — zur Eingangsseite des Vergleichers Vgl führt.

Von den Ausgangsleitungen gg und h der Taktgeneratorschaltung her werden mit den dort sendetaktsynchronisiert auftretenden Taktsignalen gemäss Fig. 2gg und Fig. 2h Verknüpfungsglieder z.B. in Form jeweils eines UND-Gliedes bzw. eines Sperr-Gliedes beaufschlagt, so dass an deren Ausgängen f1, f2, f3, f4 den einzelnen Zeitkanälen entsprechende Zeitfenstersignale auftreten, wie sie in Fig. 2 in den Zeilen f1, f2, f3, f4 dargestellt sind. Diese Zeitfenstersignale werden Entriegelungseingängen von beispielsweise mit Hilfe von Motorola-Master-Slave-D-Kippgliedern MC 1670 realisierten PPM/PLM-Pulswandlern zugeführt, die eingangsseitig mit dem übertragenen und regenerierten Signalgemisch beaufschlagt sind und die dann jeweils nur für den in dem jeweiligen Zeitfenster auftretenden Impuls bzw. die im Zeitfenster auftretende Impulspause wirksamgeschaltet sind. In Fig. 4 sind die die Zeitfenstersignale erzeugenden Verknüpfungsschaltungen und die von ihnen jeweils zeitgerecht entriegelten PPM/PLM-Puls-

wandler zusammengefasst mit Dex bezeichnet. Über die zeitkanalindividuellen Demultiplexer-Pulswandler-Schaltungen Dex gelangen die Impulse bzw. Impulspausen in der aus Fig. 2, Zeilen I1, I2, I3, I4 ersichtlichen Form zu zweckmässigerweise einen Dämpfungspol bei der Taktfrequenz aufweisenden Tiefpassfiltern Dem, in denen die ursprünglichen Modulationssignale wiedergewonnen werden und die dann jeweils über einen nachfolgenden Videoverstärker zu kanalindividuellen Ausgängen a1, a2, a3, a4 führen mögen.

## Patentansprüche

1. Zeitmultiplexsystem mit zeitlicher Bündelung von pulsmodulierten Signalen, in dem eine Information über die zeitliche Lage der Pulsrahmen aus den pulsmodulierten Signalen der Pulsrahmen gewonnen wird, dadurch gekennzeichnet, dass bei zeitlicher Bündelung von pulsmodulierten Signalen aus Pulsen gleicher Form und Breite, insbesondere von optisch übertragbaren PPM-Signalen, jeweils in dem einen Teil jedes Pulsrahmens ($T_R$) die Signale des betreffenden eines Teiles (K1, K2) der Zeitkanäle (K1, ..., K4) als Impulse übertragen werden und in dem anderen Teil jedes Pulsrahmens ($T_R$) die Signale des anderen Teiles (K3, K4) der Zeitkanäle (K1, ..., K4) als Impulspausen übertragen werden.

2. Zeitmultiplexsystem nach Anspruch 1, dadurch gekennzeichnet, dass sendeseitig lediglich in dem einen Teil jedes Pulsrahmens ($T_R$) in dem betreffenden einen Teil (K1, K2) der Zeitkanäle pulsphasenmodulierte Impulse gebildet und übertragen werden, während in dem anderen Teil jedes Pulsrahmens ($T_R$) in dem anderen Teil (K3, K4) der Zeitkanäle gebildete pulsphasenmodulierte Impulse von einem in seiner Amplitude der Impulsamplitude entsprechenden Dauersignal (g) subtrahiert werden, und die Signaldifferenz übertragen wird.

3. Zeitmultiplexsystem nach einem der beiden Ansprüche 1 oder 2, dadurch gekennzeichnet, dass empfangsseitig Impulse und Impulspausen zur Demodulation zu kanalindividuellen Tiefpassfiltern (Dem) über Demultiplexer-Pulswandler-Schaltungen (Dex) gelangen, die durch einen mit der im übertragenen Signalgemisch (s) enthaltenen Rahmentaktkomponente (g) geregelten Taktgenerator (GG, 2/1) gesteuert werden.

## Revendications

1. Système de multiplexage par répartition dans le temps avec concentration dans le temps de signaux modulés par impulsions, dans lequel on obtient une information sur la position temporelle des trames d'impulsions à partir des signaux modulés par impulsions des trames d'impulsions, caractérisé par le fait que, dans le cas d'une concentration dans le temps de signaux modulés par impulsions à partir d'impulsions de même forme et de même largeur, notamment de signaux PPM, dans une partie de chaque trame d'impulsions ($T_R$), les signaux de la partie concernée (K1, K2) des canaux temporels (K1,..., K4) sont transmis en tant qu'impulsions et, dans l'autre partie de chaque trame d'impulsins ($T_R$), les signaux de l'autre partie (K3, K4) des canaux temporels (K1,..., K4) sont transmis en tant que pauses entre impulsions.

2. Système de multiplexage par répartition dans le temps suivant la revendication 1, caractérisé par le fait que, côté émission, des impulsions modulées en position sont formées et émises simplement dans une partie de chaque trame d'impulsions ($T_R$) dans la partie concernée (K1, K2) des canaux temporels, tandis que, dans l'autre partie de chaque trame d'impulsions ($T_R$), des impulsions modulées en position formées dans l'autre partie (K3, K4) des canaux temporels sont sous-traitées d'un signal de durée (g) dont l'amplitude correspond à l'amplitude des impulsions, et le signal de différence est émis.

3. Système de multiplexage par répartition dans le temps suivant l'une des revendications 1 ou 2, caractérisé par le fait que, côté réception, des impulsions et des pauses entre impulsions pour la démodulation arrivent à des filtres passe-bas (Dem) individuels pour les différents canaux, par l'intermédiaire de circuits de conversion d'impulsions et de démultiplexage (Dex) qui sont commandés par un générateur de cadence (GG, 2/1) réglé par la composante de cadence de trame (g) contenue dans le mélange de signaux (s) transmis.

## Claims

1. Time-division multiplex system with time-wise bunching of pulse-modulated signals, wherein an item of information about the time position of the pulse frames is obtained from the pulse modulated signals of the pulse frames, characterised in that in event of time-wise bunching of pulse-modulated signals comprising pulses of the same shape and width, in particular of PPM signals which can be optically transmitted, the signals of the relevant one section (K1, K2) of the time channels (K1, ..., K4) are transmitted as pulses in the one portion of each pulse frame ($T_R$) and the signals of the other section (K3, K4) of the time channels (K1, ..., K4) are transmitted as pulse pauses in the other portion of each pulse frame ($T_R$).

2. Time-division multiplex system as claimed in claim 1, characterised in that at the transmitting end, pulse-phase-modulated pulses are produced and transmitted only in the one portion of each pulse frame ($T_R$) in the relevant one section (K1, K2) of the time channels, whereas in the other portion of each pulse frame ($T_R$), pulse-phase-modulated pulses which are produced in the other section (K3, K4) of the time channels, are subtracted from a continuous signal (g), which corresponds to the pulse amplitude in its amplitude, and the signal difference is transmitted.

3. Time-division multiplex system as claimed in claim 1 or 2, characterised in that at the receiving end, pulses and pulse pauses for demodulation are fed to channel-individual low-pass filters (Dem) *via* demultiplexer pulse transformer circuits (Dex) which are controlled by a pulse generator (GG, 2/1) which is regulated by means of the frame pulse component (g) included in the transmitted composite signal (s).

# FIG 1

# FIG 2

# FIG 3

# FIG 4